Europäisches Patentamt

European Patent Office

Office européen des brevets

(19)

(11) Publication number: **0 081 236**
**B1**

# (12) EUROPEAN PATENT SPECIFICATION

(45) Date of publication of patent specification: **23.04.86**

(51) Int. Cl.⁴: **A 23 L 1/228**

(21) Application number: **82111323.0**

(22) Date of filing: **07.12.82**

(54) A compound seasoning composition, a process for its production and its use as a food component.

(30) Priority: **07.12.81 JP 196674/81**
**27.07.82 JP 130621/82**

(43) Date of publication of application:
**15.06.83 Bulletin 83/24**

(45) Publication of the grant of the patent:
**23.04.86 Bulletin 86/17**

(84) Designated Contracting States:
**CH DE FR GB IT LI**

(56) References cited:
**US-A-2 512 385**
**US-A-3 156 569**

(73) Proprietor: **AJINOMOTO CO., INC.**
**5-8, Kyobashi 1-chome, Chuo-ku**
**Tokyo 104 (JP)**

(72) Inventor: **Shimizu, Tetsuzi**
**No. 7-22-10, Sasage Konan-ku**
**Yokohama-shi Kanagawa-ken (JP)**
Inventor: **Mizutani, Tadashi**
**No. 2128-1, Sugikubo**
**Ebina-shi Kanagawa-ken (JP)**
Inventor: **Furukawa, Hideko**
**No. 1-17-15-704, MinamiOoi**
**Shinagawa-ku Tokyo (JP)**

(74) Representative: **Schübel-Hopf, Ursula et al**
**Strehl, Schübel-Hopf, Schulz Patentanwälte**
**Widenmayerstrasse 17**
**D-8000 München 22 (DE)**

Courier Press, Leamington Spa, England.

EP 0 081 236 B1

# 0 081 236

## Description

This invention relates to all-purpose compound seasoning compositions which contain as components potassium L-glutamate, sodium L-glutamate and/or calcium L-glutamate, whose intensity of taste is equivalent to that of sodium L-glutamate, which have however superior taste intensifying properties and, impart a more complicated and wider taste spread in the mouth, have rich full-bodied flavor and are thus highly attractive as seasonings agreeable to the public taste. The invention also relates to a process for their production.

Since the discovery of L-glutamic acid as a taste component, sodium L-glutamate (MSG) has found widely spread use as an all-purpose seasoning. Moreover, combinations of MSG with nucleic acid type taste intensifying substances such as IMP, GMP etc. or combinations of these taste components with other amino acids, organic acids etc. have been generally employed as compound seasonings.

MSG has an excellent applicability as seasoning and is frequently employed as a component in compound seasonings, whereas the use of glutamic acid salts other than MSG, such as lysine glutamate, arginine glutamate, calcium glutamate, potassium glutamate, ornithine glutamate, ammonium glutamate etc., is restricted by taste intensifying properties, odors, physical properties and other aspects when used individually. Therefore, their utilization is extremely limited, for example, to the enhancement of the enzyme stability of a nucleic acid type taste intensifying substance by adding calcium L-glutamate to a nucleic acid type seasoning (Japanese Patent Publication No. 11732/1968), enrichment of the nutritive value of a seasoning by adding lysine salt, arginine salt or ornithine salt of L-glutamic acid (Japanese Patent Publication No. 18486/1961) etc.

It is therefore the task of the present invention to provide a compound seasoning on the basis of glutamic acid salts, which are not chiefly based on MSG, which may eliminate the drawbacks inherent to the separate use of the respective L-glutamic acid salts and by which an intensity of taste, a complexity of taste and a full-bodied flavor may be achieved which have not been provided by conventional MSG and conventional compound seasonings on basis of MSG.

Subject of this invention is a compound seasoning composition based on glutamic acid salts, which contains sodium, potassium and calcium components in such ratio that the gram equivalent ratio of sodium:potassium is in the range of 0—3.5:1, the gram equivalent ratio of calcium:potassium in the range of 0—1.5:1 and a ratio of (mole number of glutamic acid):(total gram equivalent number of potassium, sodium and calcium) in the range of 0.1—1.2:1, in which the content of the sodium component is different from zero.

This invention is more particularly described in the following.

In this invention, sodium, potassium and calcium components are incorporated so that the gram equivalent ratio of sodium, potassium and calcium is within following ranges, wherein however the content of the sodium component is different from zero: sodium: potassium=0—3.5:1, calcium:potassium=0—1.5:1 and (mole number of glutamic acid):(total gram equivalent number of potassium, sodium and calcium)=0.1—1.2:1. Preferably either sodium:potassium=1:4—5:2, (calcium):(total of potassium, sodium and calcium)=0—0.3:1 and (mole number of glutamic acid):(total gram equivalent number of potassium, sodium and calcium)=0.4—1.2:1, or calcium:potassium=0—1.5:1, (sodium):(total of potassium, sodium and calcium)=0—0.15:1 and (mole number of glutamic acid)=(total gram equivalent number of potassium, sodium and calcium)=0.4—1.2:1.

The glutamic acid used is not restricted by the production process, examples of which include fermentation, acid decomposition etc. The compounds of sodium, potassium and calcium used as starting materials are not restricted by their sources, examples of which include glutamates, chlorides, hydroxides, phosphates, carbonates, organic acid salts, fish, dried fish, walnuts, egg, meat etc.

One of the practical examples of the present seasonings comprises 30—95% by weight of potassium L-glutamate, 5—70% by weight of sodium L-glutamate and 0—30% by weight of calcium L-glutamate.

The compound seasonings of this invention can be obtained merely by mixing the ingredients, i.e. crystals, fine crystalline powders, solutions, suspensions etc. of the respective components and, if necessary, drying. If, however, the proportion of potassium L-glutamate is high as in the above practical example the rheological properties of the products are adversely affected or the components of the compositions tend to be classified and hence are not homogeneously distributed, since potassium L-glutamate is highly hygroscopic. Further there are some problems concerning the physical properties of these compounds, for example, sodium L-glutamate is excellent in solubility in water, but shows a slow in the dissolving rate in soy sauce and similar seasonings. The present inventors have found that these drawbacks may be eliminated by producing the seasoning compositions of this invention by a process which comprises coating, while pelletizing, potassium L-glutamate with sodium L-glutamate and optionally calcium L-glutamate.

Pulverized sodium L-glutamate and calcium L-glutamate are finely divided crystals obtained by pulverizing crystals of sodium or calcium L-glutamate, or by directly drying a purified liquor in the production process of sodium or calcium L-glutamate, and those having a particle size of 200 μm or less are preferred for satisfactory coating.

On the other hand, the used potassium L-glutamate has the form of crystals which have not been pulverized as above. Since potassium L-glutamate exhibits hygroscopic and deliquescent properties, it is

2

preferred that the surface area is small in order to improve the hygroscopicity of the product, and therefore, that having a particle size of about 0.3—2 mm is preferably employed.

The above 2 or 3 components are pelletized with a binder. While the binder is not particularly restricted, that exerting no adverse influence on the taste and physical properties may be employed, for example, water and other water soluble binders such as an aqueous sodium L-glutamate solution, an aqueous calcium L-glutamate solution, an aqueous dextrin solution, starch glue, an aqueous nucleic acid type taste intensifying substance solution etc.

The amount of the binder added can vary depending on the pelletizing method, and in general, approximately 3—20% by weight of the above described various aqueous solutions may be added.

For pelletizing, any pelletizing method for powder and crystalline starting materials may be employed, and its selection is appropriately done according to the shape, size, strength etc. of the intended granules.

For example, stirred coating pelletization, extrusion pelletization, fluidized pelletization and tumbling pelletization are preferred. The stirred coating pelletization is a method which comprises mixing the crystals of the starting materials if necessary by adding the binder solution, thereafter mixing the starting material powder and drying. If necessary, pulverization is conducted. The extrusion pelletization is a method which comprises adding the binder solution to the powder or crystals of the starting materials and extruding the mixture through a screen or predetermined holes of a die. The fluidized pelletization is a pelletizing method which comprises fluidizing the starting materials in a fluidized bed in a gas stream, and simultaneously generating appropriate amounts of nuclei by adding moisture and growing the particles themselves. The tumbling pelletization is a method which comprises tumbling the starting materials in a vibrating tray or a rotary cylinder, and spraying the binder solution thereby combining the particles to grow the particles.

The compound seasoning granules pelletized by the above methods are dried and sifted if required. The obtained granules show rapid dissolving rates in seasonings, such as soy sauce, and in water and accordingly the seasoning effect is instantaneously manifested. They also have excellent flowing characteristics with less crystalline feeling and thus it is possible to obtain a soft and natural feeling as foods which cannot be expected with the crystalline products. From the aspect of taste intensity, there is exerted an excellent and unique effect, that is, the respective components are uniformly mixed to provide a novel compound seasoning having unprecedented full complexity and rich taste.

As the starting materials used in the experimental examples and examples hereinbelow, those which generally possess water of crystallization were employed as such, for example, potassium glutamate monohydrate, sodium glutamate monohydrate, calcium glutamate tetrahydrate, sodium citrate dihydrate, sodium malate hemihydrate, calcium lactate pentahydrate etc. Also as the other starting materials, those in the generally available form were employed.

Experimental Example 1

Using lysine salt, potassium salt, sodium salt, ammonium salt and calcium salt of L-glutamic acid, the taste intensifying properties were evaluated for the respective salts singly and as combinations of two or more thereof.

For the evaluation, the respective salts or combinations thereof were dissolved in 0.7% saline at a rate of 2 g each as free glutamic acid per liter, to prepare samples. They were subjected to an organoleptic test by a panel consisting of 20 well-trained members, for testing the intensity of taste, bitterness, saltiness, acidness, complexity and full taste, the width of taste and preference of the overall taste.

As shown in Table 1, in addition to tastiness, calcium L-glutamate shows bitterness, and potassium L-glutamate also has very slight bitterness (while sodium L-glutamate has some saltiness), but when these three components are mixed in a gram equivalent ratio of sodium, potassium and calcium such that sodium:potassium=0—3.5:1 and calcium:potassium=0—1.5:1, which is the composition of the above-described present invention, the disadvantages of the individual salts are overcome while the advantages inherent thereto are maintained, that is, (1) no bitterness is tasted; (2) the complexity and width of the taste and the fullness of the taste are intensified; and (3) good harmony with table salt is imparted.

TABLE 1
Taste intensifying properties and palatability of various glutamic acid salts singly or as compositions
The scale of the intensity of each taste is expressed relative to the intensity of taste of MSG taken as 100.

| Component Sample | Lysine L-glutamate % | Potassium L-glutamate % | Sodium L-glutamate % | Ammonium L-glutamate % | Calcium L-glutamate % | Intensity of taste | Intensity of bitterness | Intensity of saltiness | Intensity of acidness | Intensity of complexity and mouthfulness | Width of taste | Palatability (Preference of the overall taste) |
|---|---|---|---|---|---|---|---|---|---|---|---|---|
| 1 | 100 | | | | | 100 | 3 | 0 | 0 | 0 | 0 | Slightly bitter and thus slightly bad |
| 2 | | 100 | | | | 100 | 4 | 0 | 0 | 5 | 5 | Bitter and thus slightly bad |
| 3 | | | 100 | | | 100 | 0 | 10 | 0 | 0 | 0 | Good |
| 4 | | | | 100 | | 100 | 0 | 0 | 10 | 0 | 0 | Has an acid taste and thus bad |
| 5 | | | | | 100 | 100 | 10 | 0 | 0 | 3 | 3 | Bitter and thus bad |
| 6 | | | 50 | 50 | | 100 | 3 | 3 | 0 | 1 | 1 | Bitter and thus slightly bad |
| 7 | | 50 | 30 | | 20 | 100 | 0 | 2 | 0 | 3 | 3 | Has full taste and thus very good |

(Taste intensifying properties)

Experimental Example 2

By employing varied ratios of L-glutamic acid, sodium, potassium and calcium incorporated in combinations of three or more components selected from sodium L-glutamate, L-glutamic acid, potassium chloride, potassium carbonate, potassium phosphate, calcium chloride, calcium lactate, calcium carbonate and calcium hydroxide, the taste intensifying properties were evaluated.

For evaluation, the respective combinations were dissolved in 0.7% saline solution at a rate of 2 g each as free glutamic acid per liter, to prepare samples. The samples were subjected to an organoleptic test by a gustatory panel consisting of 20 well-trained members, for the taste, bitterness, saltiness, complexity, fullness of taste, width of taste, impure taste and preference of taste.

As clear from Table 3, where Na/K exceeds 5 and also Ca/K is less than 2, the composition has slightly stronger bitterness than sodium L-glutamate but otherwise its taste intensifying properties are more or less comparable to those of sodium L-glutamate. Where Na/K is 3.5 or less and Ca/K exceeds 2, the composition has a much more bitter and impure taste than sodium L-glutamate and thus is not preferable. Where Na/K is less than 3.5 and Ca/K is less than 1.5, the composition is slightly more bitter than sodium L-glutamate but still not bad in taste, has better complexity and full taste than sodium L-glutamate, and further, the width of taste was more intensified and this was much preferred also from the aspect of palatability.

TABLE 2

| | | Na/K | Ca/K | Glu/(K+Na+Ca) |
|---|---|---|---|---|
| 1 | MSG 187 g, Glutamic acid 2673 g, $K_2CO_3$ 397 g, $CaCO_3$ 575 g | 0.17 | 2.00 | 1.05 |
| 2 | MSG 187 g, $K_2CO_3$ 138 g, $CaCl_2$ 222 g | 0.50 | 2.00 | 0.14 |
| 3 | MSG 187 g, $K_2HPO_4$ 87 g, $CaCO_3$ 100 g | 1.00 | 2.00 | 0.25 |
| 4 | MSG 187 g, $KH_2PO_4$ 23 g, $K_2HPO_4$ 15 g, $CaCO_3$ 33 g | 2.93 | 1.93 | 0.50 |
| 5 | MSG 187 g, Glutamic acid 29 g, KCl 14 g, $Ca(OH)_2$ 14 g | 5.32 | 2.01 | 0.76 |
| 6 | MSG 187 g, Glutamic acid 400 g, $K_2CO_3$ 370 g, $Ca(OH)_2$ 201 g | 0.19 | 1.01 | 0.32 |
| 7 | MSG 187 g, KCl 75 g, Calcium lactate 152 g | 0.99 | 0.98 | 0.33 |
| 8 | MSG 187 g, $K_2CO_3$ 13 g, Calcium lactate 26 g | 5.31 | 0.90 | 0.74 |
| 9 | MSG 187 g, Glutamic acid 158 g, $KH_2PO_4$ 381 g, $K_2HPO_4$ 244 g, $Ca(OH)_2$ 80 g | 0.18 | 0.39 | 0.25 |
| 10 | MSG 187 g, Glutamic acid 198 g, $K_2HPO_4$ 171 g, $Ca(OH)_2$ 27 g | 0.51 | 0.37 | 0.69 |
| 11 | MSG 187 g, KCl 76 g, $CaCl_2$ 22 g | 0.98 | 0.39 | 0.41 |
| 12 | MSG 187 g, Glutamic acid 25 g, $K_2HPO_4$ 29 g, Calcium glutamate 20 g | 3.00 | 0.39 | 0.84 |
| 13 | MSG 187 g, Glutamic acid 11 g, $K_2CO_3$ 14 g, $CaCO_3$ 4 g | 4.93 | 0.39 | 0.84 |

Therefore, the range sodium:potassium=0—3.5:1 and calcium:potassium=0—1.5:1 was the optimum range for obtaining a compound seasoning which had full taste (mouthfulness) and complexity as well as the width of taste.

| | Intensity of taste | Intensity of bitterness | Intensity of saltiness | Intensity of complexity and mouthfulness | Width of taste | Intensity of impure taste | |
|---|---|---|---|---|---|---|---|
| 1 | 100 | 40 | 5 | 5 | 0 | 40 | Bad taste |
| 2 | 100 | 15 | 5 | 5 | 0 | 15 | Bad taste |
| 3 | 100 | 15 | 8 | 5 | 0 | 20 | Bad taste |
| 4 | 100 | 5 | 8 | 5 | 0 | 0 | Bad taste |
| 5 | 100 | 2 | 10 | 0 | 0 | 0 | Not different from MSG |
| 6 | 100 | 10 | 2 | 10 | 5 | 5 | Good taste |
| 7 | 100 | 5 | 5 | 5 | 5 | 0 | Good taste |
| 8 | 100 | 2 | 8 | 0 | 0 | 0 | Not different from MSG |
| 9 | 100 | 10 | 2 | 5 | 5 | 5 | Good taste |
| 10 | 100 | 5 | 2 | 5 | 5 | 0 | Good taste |
| 11 | 100 | 5 | 8 | 5 | 5 | 0 | Good taste |
| 12 | 100 | 3 | 8 | 5 | 5 | 0 | Good taste |
| 13 | 100 | 1 | 10 | 0 | 0 | 0 | Not different from MSG |
| MSG | 100 | 0 | 10 | 0 | 0 | 0 | |

* The intensity of taste is taken as 100.

# 0 081 236

Compositions were prepared from potassium chloride, sodium chloride, calcium chloride, potassium glutamate, sodium glutamate and calcium glutamate in the optimum range of potassium, sodium and calcium and in varied proportions such that the mole number of glutamic acid relative to the total gram equivalent number of potassium, sodium and calcium was 0.05, 0.1, 0.2, 0.4, 0.7 or 1.0, then these compositions were dissolved in distilled water at a rate of 2 g each as free glutamic acid per liter, to prepare samples. These samples were subjected to an organoleptic test by a panel of 20 well-trained members, for the taste, bitterness, saltiness, complexicity, mouthfulness, width of taste, impure taste, and preference of taste.

As clear from Table 4—6, when the mole number of glutamic acid relative to the total gram equivalent number of potassium, sodium and calcium was 0.05 or less, the bitterness and saltiness characteristic for the taste of inorganic ions of potassium, sodium and calcium were intensified and thus the taste was bad. When the mole number of glutamic acid relative to the total gram equivalent number of potassium, sodium and calcium is 0.1 or higher, the taste is good. Also, when salts other than potassium, sodium and calcium glutamates or glutamic acid were employed in combination with the above starting materials, a good taste was obtained, but since if the mole number of glutamic acid exceeds the total gram equivalent number of potassium, sodium and calcium, an impure taste other than that potassium, sodium and calcium is imparted, and also the pH is varied, the upper limit for the mole number of glutamic acid relative to the total gram equivalent number of potassium, sodium and calcium for practical use is desirably 1.2. Therefore, the ratios of sodium:potassium=0—3.5:1, calcium:potassium=0—1.5:1 and (mole numebr of glutamic acid):(total gram equivalent number of potassium, sodium and calcium)=0.1—1.2:1 are the optimum ranges for obtaining a compound seasoning having full taste and complexity as well as the width of taste.

### TABLE 4
### Na/K=1/5, Ca/K=2/5

| Glu/(K+Na+Ca) | Formulation | | | | | | Evaluation | | | | Remarks |
| | KCl | NaCl | CaCl$_2$ | Potassium glutamate | Sodium glutamate | Calcium glutamate | Taste | Bitterness | Complexity & mouthfulness | Impure taste | |
|---|---|---|---|---|---|---|---|---|---|---|---|
| 0.05 | 43.2 | 7.0 | 13.9 | 10.2 | 0 | 0 | 100 | 40 | 10 | 70 | Bad taste |
| 0.1 | 39.5 | 7.0 | 13.9 | 20.3 | 0 | 0 | 100 | 40 | 10 | 30 | Good taste |
| 0.2 | 32.0 | 7.0 | 13.9 | 40.6 | 0 | 0 | 100 | 30 | 10 | 20 | Good taste |
| 0.4 | 17.1 | 7.0 | 13.9 | 81.2 | 0 | 0 | 100 | 10 | 10 | 10 | Good taste |
| 0.7 | 0 | 2.9 | 13.9 | 127.9 | 13.1 | 0 | 100 | 10 | 5 | 5 | Good taste |
| 1.0 | 0 | 0 | 0 | 127.9 | 22.4 | 50.5 | 100 | 5 | 10 | 5 | Good taste |

### TABLE 5
### Na/K=1, Ca/K=2/5

| Glu/(K+Na+Ca) | Formulation | | | | | | Evaluation | | | | Remarks |
| | KCl | NaCl | CaCl$_2$ | Potassium glutamate | Sodium glutamate | Calcium glutamate | Taste | Bitterness | Complexity & mouthfulness | Impure taste | |
|---|---|---|---|---|---|---|---|---|---|---|---|
| 0.05 | 27.5 | 24.6 | 8.9 | 10.2 | 0 | 0 | 100 | 50 | 10 | 10 | Bad taste |
| 0.1 | 23.8 | 24.6 | 8.9 | 20.3 | 0 | 0 | 100 | 30 | 10 | 10 | Good taste |
| 0.2 | 16.4 | 24.6 | 8.9 | 40.6 | 0 | 0 | 100 | 20 | 5 | 5 | Good taste |
| 0.4 | 1.5 | 24.6 | 8.9 | 81.2 | 0 | 0 | 100 | 10 | 5 | 2 | Good taste |
| 0.7 | 0 | 8.2 | 8.9 | 85.3 | 52.4 | 0 | 100 | 5 | 5 | 2 | Good taste |
| 1.0 | 0 | 0 | 0 | 85.3 | 78.5 | 32.3 | 100 | 5 | 10 | 2 | Good taste |

TABLE 6
Na/K=3, Ca/K=2/5

| Glu/(K+Na+Ca) | Formulation | | | | | | Evaluation | | | | Remarks |
| | KCl | NaCl | CaCl$_2$ | Potassium glutamate | Sodium glutamate | Calcium glutamate | Taste | Bitterness | Complexity & mouthfulness | Impure taste | |
|---|---|---|---|---|---|---|---|---|---|---|---|
| 0.05 | 39.5 | 11.1 | 12.8 | 10.2 | 0 | 0 | 100 | 20 | 10 | 5 | Bad taste |
| 0.1 | 35.8 | 11.1 | 12.8 | 20.3 | 0 | 0 | 100 | 10 | 10 | 2 | Good taste |
| 0.2 | 28.3 | 11.1 | 12.8 | 40.6 | 0 | 0 | 100 | 5 | 5 | 0 | Good taste |
| 0.4 | 13.4 | 11.1 | 12.8 | 81.2 | 0 | 0 | 100 | 5 | 5 | 0 | Good taste |
| 0.7 | 0 | 4.1 | 12.8 | 117.7 | 22.4 | 0 | 100 | 2 | 2 | 0 | Good taste |
| 1.0 | 0 | 0 | 0 | 117.7 | 35.5 | 46.5 | 100 | 2 | 2 | 0 | Good taste |

Experimental Example 3

Six compositions (Sample Nos. 6, 7, 9, 10, 11 and 12) within the optimum range were chosen among the samples prepared in Experimental Example 2, dissolved in 0.7% saline solution at a rate of 2 g each as free glutamic acid per liter, to prepare samples, respectively, and subjected to an organoleptic test by a gustanory penel of 20 well-trained members for the complexity and mouthfulness, the width of taste, and preference of the taste by one-pair comparison with each other.

As clear from Table 7, the compositions 10 and 11 within the range that sodium:potassium=1:4—5:2 and calcium:(total of potassium, sodium and calcium)=0—0.3:1 have more intensified complexity and mouthfulness and also a wider taste than the compositions 7 and 12. In comparison between the compositions 10 and 11 and that between the compositions 7 and 12, there was no evaluated item exhibiting a significant difference. The compositions 6 and 9 within the range that calcium:potassium=0—1.5:1 and sodium:(total of potassium, sodium and calcium)=0—0.15:1 have no evaluated item significantly different from each other, but their thickness of taste, complexity and mouthfulness are stronger than those of the compositions 10 and 11, respectively. Nevertheless, preference was equally split between the compositions 6 and 9, and the compositions 10 and 11, since the complexity and mouthfulness were too strong. However, the compositions 6 and 9 were much preferred than the compositions 7 and 12. Therefore, the above range that sodium:potassium=1:4—5:2 and calcium:total of potassium, sodium and calcium=0—0.3:1 or calcium:potassium=0—0.8:1 and sodium:total of potassium, sodium and calcium=0—0.15:1 is a more preferred range among the optimum ranges, for obtaining a compound seasoning having even further intensified mouthfulness and complexicity as well as a wider taste.

# 0 081 236

TABLE 7

| | | 6 | | 7 | | 9 | | 10 | | 11 | | 12 | |
|---|---|---|---|---|---|---|---|---|---|---|---|---|---|
| 6 | Which is more intense in complexity and mouthfulness | | | | | | | | | | | | |
| | Which is more intense in width of taste | | | | | | | | | | | | |
| | Which is preferred | | | | | | | | | | | | |
| 7 | Which is more intense in complexity and mouthfulness | 4 | * | | | | | | | | | | |
| | Which is more intense in width of taste | 4 | * | | | | | | | | | | |
| | Which is preferred | 5 | * | | | | | | | | | | |
| 9 | Which is more intense in complexity and mouthfulness | 10 | — | 15 | * | | | | | | | | |
| | Which is more intense | 11 | — | 15 | * | | | | | | | | |
| | Which is preferred | 12 | — | 15 | * | | | | | | | | |
| 10 | Which is more intense in complexity and mouthfulness | 5 | * | 15 | * | 5 | * | | | | | | |
| | Which is more intense in width of taste | 5 | * | 15 | * | 5 | * | | | | | | |
| | Which is preferred | 10 | — | 16 | * | 8 | — | | | | | | |
| 11 | Which is more intense in complexity and mouthfulness | 5 | * | 15 | * | 5 | * | 9 | — | | | | |
| | Which is more intense in width of taste | 4 | * | 15 | * | 5 | * | 8 | — | | | | |
| | Which is preferred | 9 | — | 15 | * | 8 | — | 9 | — | | | | |
| 12 | Which is more intense in complexity and mouthfulness | 5 | * | 8 | — | 5 | * | 5 | * | 5 | * | | |
| | Which is more intense in width of taste | 5 | * | 10 | — | 5 | * | 5 | * | 5 | * | | |
| | Which is preferred | 5 | * | 10 | — | 5 | * | 5 | * | 5 | * | | |

n=20.

The present seasoning compositions not only are applicable as such as all-purpose seasonings, but produce in combination with nucleic acid type taste intensifying substances, such as IMP, GMP etc., a synergistic effect on the taste, and thus may be applied as all-purpose seasonings having high potency of tastiness. Furthermore, they are widely applicable in seasonings, foods etc. by combining them with other amino acids, organic acids, or natural flavouring agents.

11

The compound seasonings of this invention may be obtained by merely mixing crystals, fine crystalline powders, powdery granules, solutions, suspensions etc. of the respective components and, if necessary, drying.

This invention is more particularly described by the following examples. In the examples, all the "%" are by weight.

Example 1

According to the compositions in Table 8 below, the respective components were uniformly mixed to prepare compound seasonings A, B and C, respectively.

TABLE 8

| Compound seasoning | Potassium L-glutamate monohydrate | Sodium L-glutamate monohydrate | Calcium L-glutamate · tetrahydrate |
|---|---|---|---|
| A | 65 | 11 | 25 |
| B | 44 | 39 | 17 |
| C | 17 | 77 | 6 |

Thereafter, these respective compound seasonings were tested by two-point comparison with MSG using clear·soup as the evaluation system by a panel consisting of 20 well-trained members.

The clear soup was prepared from the composition set forth in Table 9. The organoleptic test was conducted for the items: the intensity of taste the intensity of complexity and preference of the overall taste of the clear soup.

The results are set forth in Table 10. The soup to which the compound seasoning A or B had been added had more intensified complexity and was significantly preferred as compared with that to which MSG alone had been added.

TABLE 9

| | Clear soup |
|---|---|
| Compound seasoning A* | 2.14 g |
| (or Compound seasoning B)* | (2.10 g) |
| (or Compound seasoning C)* | (2.04 g) |
| (or MSG) | (2 g) |
| Water | 1 l |
| Flakes of dried bonito | 10 g |
| Table salt | 8 g |
| Soy sauce | 3 ml |

* The amount added was changed in order to make the content of the L-glutamic acid salt equivalent to the content of L-glutamic acid in the control MSG.

TABLE 10

| | Test No. 1 Compound seasoning A | MSG | Test No. 2 Compound seasoning B | MSG | Test No. 3 Compound seasoning C | MSG |
|---|---|---|---|---|---|---|
| Which is more intense in taste | 9 | 11 | 10 | 10 | 9 | 11 |
| Which is more intense in complexity | 17 (**) | 3 | 15 (*) | 5 | 13 | 7 |
| Which is more preferable in the overall taste | 16 (*) | 4 | 15 (*) | 5 | 12 | 8 |

(*) Significantly different at a level of significance of 5%.
(**) Significantly different at a level of significance of 1%.

Example 2

According to the compositions in Table 11 below, the respective components were uniformly mixed to prepare compound seasonings D—G, respectively.

TABLE 11

| Compound seasoning | Potassium L-glutamate monohydrate | Sodium L-glutamate monohydrate | Calcium L-glutamate tetrahydrate |
|---|---|---|---|
| D | 69 | 31 | 0 |
| E | 54 | 24 | 22 |
| F | 41 | 19 | 41 |
| G | 29 | 13 | 58 |

Thereafter, these respective compound seasonings were tested by two-point comparison with MSG using *miso* soup as the evaluation system by a panel consisting of 20 well-trained members.

The *miso* (fermented soybean paste) soup was prepared from the composition set forth in Table 12. The organoleptic test was conducted for the items: the intensity of taste, the intensity of complexity and preference of the overall taste of the *miso* soup.

The results are set forth in Table 13. Those to which the compound seasonings D, E and F had been added respectively had more intensified complexicity and significantly preferred as compared with that to which MSG alone had been added. That to which G had been added, although having a more intensified complexity was significantly less preferred, as compared with that to which MSG alone had been added.

**0 081 236**

TABLE 12

| | Miso soup |
|---|---|
| Compound seasoning D* | 2.12 g |
| (or Compound seasoning E)* | (2.12 g) |
| (or Compound seasoning F)* | (2.14 g) |
| (or Compound seasoning G)* | (2.14 g) |
| (or MSG) | (2 g) |
| IN (Sodium inosine-5'-monophosphate produced by Ajinomoto Co., Inc.) | 0.05 g |
| Water | 1 l |
| Flakes of dried bonito | 10 g |
| Miso | 90 g |

\* The amount added was changed so as to make the content of the L-glutamic acid salt equivalent to the content of L-glutamic acid in the control MSG.

14

## TABLE 13

| | Test No. 1<br>Compound<br>seasoning<br>D | | MSG | Test No. 2<br>Compound<br>seasoning<br>E | | MSG | Test No. 3<br>Compound<br>seasoning<br>F | | MSG | Test No. 4<br>Compound<br>seasoning<br>G | | MSG |
|---|---|---|---|---|---|---|---|---|---|---|---|---|
| Which is more intense in taste | 10 | | 10 | 11 | | 9 | 9 | | 11 | 9 | | 11 |
| Which is more intense in complexity | 16 | (*) | 4 | 15 | (*) | 5 | 16 | (*) | 4 | 17 | (*) | 3 |
| Which is more preferable in the overall taste | 16 | (*) | 4 | 15 | (*) | 5 | 16 | (*) | 4 | 3 | (*) | 17 |

(*) Significantly different at a level of significance of 5%.

Example 3

According to the compositions in Table 14 below, the respective components were mixed, dissolved, neutralized with HCl and spray dried to prepare compound seasonings H—K, respectively.

TABLE 14

| Compound seasoning | Amount incorporated |
|---|---|
| H | $Na_2CO_3$ 53 g, glutamic acid 547 g, calcium carbonate 370 g, calcium hydroxide 201 g |
| I | MSG 187 g, potassium carbonate 397 g, calcium carbonate 575 g |
| J | $Na_2CO_3$ 53 g, glutamic acid 171 g, potassium chloride 14 g, calcium hydroxide 14 g |
| K | MSG 187 g, glutamic acid 14 g, dipotassium hydrogenphosphate 17 g, calcium hydroxide 7 g |

Thereafter, these respective compound seasonings were tested by two-point comparison with MSG using *miso* soup as the evaluation system by a panel consisting of 20 well-trained members.

The *miso* soup was prepared from the composition set forth in Table 15. The organoleptic test was conducted for the items: the intensity of taste, the intensity of complexity and preference of the overall taste of the *miso* soup.

The results are set forth in Table 16. The soup to which the compound seasoning H had been added had more intensified complexicity and was significantly preferred as compared with that to which MSG alone had been added. That to which the compound seasoning I had been added had a worse taste than that to which MSG alone had been added and was significantly less preferred. Those to which the compound seasonings J and K had been added respectively did not show any significant difference from MSG.

TABLE 15

| | Miso soup |
|---|---|
| Compound seasoning H* | 3.32 g |
| (or Compound seasoning I)* | (12.39 g) |
| (or Compound seasoning J)* | (2.18 g) |
| (or Compound seasoning K)* | (2.20 g) |
| (or MSG) | (2 g) |
| Water | 1 l |
| Flakes of dried bonito | 10 g |
| Miso | 90 g |

\* The amount added was changed so as to make the content of the L-glutamic acid salt equivalent to the content of L-glutamic acid in the control MSG.

## TABLE 16

| | Test No. 1 | | | Test No. 2 | | | Test No. 3 | | Test No. 4 | |
| | Compound seasoning H | | MSG | Compound seasoning I | | MSG | Compound seasoning J | MSG | Compound seasoning K | MSG |
|---|---|---|---|---|---|---|---|---|---|---|
| Which is more intense in taste | 8 | | 12 | 8 | | 12 | 9 | 11 | 10 | 10 |
| Which is more intense in complexity | 16 | (*) | 4 | 14 | | 6 | 13 | 7 | 9 | 11 |
| Which is more preferable in the overall taste | 16 | (*) | 4 | 4 | (*) | 16 | 12 | 8 | 9 | 11 |

(*) Significantly different at a level of significance of 5%.

Example 4

According to the compositions in Table 17 below, the respective componens were uniformly mixed to prepare compound seasonings L—P, respectively.

TABLE 17

| Compound seasoning | Amount incorporated |
|---|---|
| L | Potassium glutamate 203 g, calcium chloride 111 g, GMP 1 g |
| M | MSG 187 g, Glutamic acid 14 g, dipotassium hydrogen phosphate 17 g, calcium carbonate 19 g, GMP 1 g |
| N | MSG 187 g, Glutamic acid 15 g, potassium carbonate 14 g, calcium carbonate 4 g, GMP 1 g |
| P | Glutamic acid 147 g, potassium carbonate 49 g, calcium hydroxide 10 g, GMP 1 g |

Thereafter, these respective compound seasonings were tested by two-point comparison with MSG using *miso* soup as the evaluation system by a panel consisting of 20 well-trained members.

The *miso* soup was prepared from the composition set forth in Table 18. The organoleptic test was conducted for the items: the intensity of taste, the intensity of complexity and preference of the overall taste of the *miso* soup.

The results are set forth in Table 19. That to which the compound seasoning L had been added had more intensified complexity and was significantly preferred as compared with that to which MSG alone had been added. That to which the compound seasoning M had been added had a worse taste than that to which MSG alone had been added and was significantly less preferred. Those to which the compound seasonings N and P had been added respectively did not show any significant difference from MSG.

TABLE 18

| | Miso soup |
|---|---|
| Compound seasoning L* | 2.19 g |
| (or Compound seasoning M)* | (2.31 g) |
| (or Compound seasoning N)* | (2.14 g) |
| (or Compound seasoning P)* | (2.20 g) |
| (or MSG) | (2 g) |
| Water | 1 l |
| Flakes of dried bonito | 10 g |
| Miso | 90 g |

* The amount added was changed so as to make the content of the L-glutamic acid salt equivalent to the content of L-glutamic acid in the control MSG.

18

TABLE 19

| | Test No. 1 Compound seasoning L | | MSG | Test No. 2 Compound seasoning M | | MSG | Test No. 3 Compound seasoning N | | MSG | Test No. 4 Compound seasoning P | | MSG |
|---|---|---|---|---|---|---|---|---|---|---|---|---|
| Which is more intense in taste | 8 | | 12 | 9 | | 11 | 7 | | 13 | 12 | | 8 |
| Which is more intense in complexity | 14 | | 6 | 12 | | 8 | 9 | | 11 | 15 | (*) | 5 |
| Which is more preferable in the overall taste | 4 | (*) | 16 | 12 | | 8 | 10 | | 10 | 16 | (*) | 4 |

(*) Significantly different at a level of significance of 5%.

Example 5

Compound seasonings Q—T having the compositions of Table 20 below were prepared respectively by mixing uniformly.

TABLE 20

| Compound seasoning | Amount incorporated |
|---|---|
| Q | MSG 187 g, Potassium glutamate 203 g |
| R | MSG 187 g, Potassium glutamate 41 g |
| S | MSG 187 g, Potassium glutamate 203 g, calcium glutamate 202 g |
| T | MSG 187 g, Potassium glutamate 41 g, calcium glutamate 40 g |

Thereafter, these respective compound seasonings were tested by two-point comparison with MSG using consommé as the evaluation system by a panel consisting of 20 well-trained members.

The consommé was prepared from the composition in Table 21. The organoleptic test was conducted for the items: the intensity of taste, the intensity of complexity and preference of the overall taste of the consommé.

The results are set forth in Table 22. Those to which the compound seasonings Q and S had been added respectively had more intensified complexity and were significantly preferred as compared with that to which MSG alone had been added.

TABLE 21

| Starting material | Amount incorporated |
|---|---|
| Compound seasoning Q* | 3.13 g |
| (or Compound seasoning R)* | (3.04 g) |
| (or Compound seasoning S)* | (3.17 g) |
| (or Compound seasoning T)* | (3.07 g) |
| (or MSG) | (3 g) |
| Vegetable protein hydrolysate powder | 12 g |
| Beef extract powder | 1 g |
| Yeast extract powder | 1 g |
| Beef tallow | 0.9 g |
| Table salt | 5.4 g |
| Sugar | 3.5 g |
| Onion powder | 1.9 g |
| Celery powder | 0.3 g |
| Sea salt pepper | 0.02 g |
| Caramel powder | 0.4 g |
| Water | 1 l |

* The amount added was changed in order to make the content of the L-glutamic acid salt equivalent to the content of L-glutamic acid in the control MSG.

TABLE 22

| | Test No. 1 Compound seasoning Q | | MSG | Test No. 2 Compound seasoning R | | MSG | Test No. 3 Compound seasoning S | | MSG | Test No. 4 Compound seasoning T | | MSG |
|---|---|---|---|---|---|---|---|---|---|---|---|---|
| Which is more intense in taste | 8 | | 12 | 9 | | 11 | 10 | | 10 | 10 | | 10 |
| Which is more intense in complexity | 15 | (*) | 5 | 9 | | 11 | 16 | (*) | 4 | 12 | | 8 |
| Which is more preferable in the overall taste | 15 | (*) | 5 | 11 | | 9 | 16 | (*) | 4 | 12 | | 8 |

Example 6

Compound seasonings X—Z having the compositions of Table 23 below were prepared respectively by mixing uniformly.

TABLE 23

| Compound seasoning | Amount incorporated |
|---|---|
| X | MAG 187 g, Glutamic acid 198 g, dipotassium hydrogenphosphate 171 g, calcium hydroxide 27 g |
| Y | MSG 187 g, Potassium dihydrogenphosphate 69 g, dipotassium hydrogenphosphate 44 g, calcium lactate 62 g |
| Z | MSG 187 g, Glutamic acid 16 g, calcium chloride 25 g, calcium carbonate 6 g |

Thereafter, these respective compound seasonings were tested by two-point comparison with MSG using chicken bone soup as the evaluation system by a panel consisting of 20 well-trained members.

The chicken bone soup was prepared as shown in Table 24. The organoleptic test was conducted for the items: the intensity of taste, the intensity of complexity and preference of the overall taste of the chicken bone soup.

The results are set forth in Table 25. Those to which the compound seasonings X, Y and Z had been added respectively had more intensified complexity were significantly preferred compared with that to which MSG alone had been added.

TABLE 24

| Starting material | Amount incorporated |
|---|---|
| Compound seasoning X* | 5.95 g |
| (or Compound seasoning Y)* | (8.71 g) |
| (or Compound seasoning Z)* | (5.64 g) |
| (or MSG) | (5 g) |
| Chicken bone soup stock** | 1 l |
| Table salt | 8 g |

\* The amount added was changed in order to make the content of the L-glutamic acid salt equivalent to the content of L-glutamic acid in the control MSG.

\*\* The chicken bone soup stock was prepared by adding 8 l of water to 500 g of chicken bones and 500 g of pork bones, boiling down for 3 hours, and thereafter filtering to obtain 6 l.

TABLE 25

| | Test No. 1 Compound seasoning X | | MSG | Test No. 2 Compound seasoning Y | | MSG | Test No. 6 Compound seasoning Z | | MSG |
|---|---|---|---|---|---|---|---|---|---|
| Which is more intense in taste | 9 | | 11 | 8 | | 12 | 11 | | 9 |
| Which is more intense in complexity | 16 | (*) | 4 | 15 | (*) | 5 | 16 | (*) | 4 |
| Which is more preferable in the overall taste | 16 | (*) | 4 | 15 | (*) | 5 | 16 | (*) | 4 |

(*) Significantly different at a level of significance of 5%.
(**) Significantly different at a level of significance of 1%.

22

Example 7

According to the compositions in Table 26 below, the respective components were uniformly mixed, dissolved and thereafter spray dried to obtain compound seasonings a—c.

TABLE 26

| Compound seasoning | Amount incorporated |
|---|---|
| a | MSG: 187 g, Glutamic acid: 2673 g, potassium carbonate: 397 g, calcium carbonate: 575 g |
| b | MSG: 187 g, Potassium glutamate: 1015 g, calcium glutamate: 1010 g |
| c | MSG: 187 g, Potassium glutamate: 1015 g, calcium glutamate: 404 g |

Thereafter, these respective compound seasonings were tested by two-point comparison with MSG using chicken bone soup as the evaluation system by a panel consisting of 20 well-trained members.

The chicken bone soup was prepared from the composition shown in Table 27. The organoleptic test was conducted for the items: the intensity of taste, the intensity of complexity and preference of the overall taste of the chicken bone soup.

The results are set forth in Table 28. In those to which the compound seasonings b and c had been added respectively, the complexity was significantly more intense as compared with that to which MSG alone had been added, but the preference in the overall taste was equally split. That to which the compound seasoning a had been added had a worse taste and was significantly less preferred than that to which MSG alone had been added.

TABLE 27

| | Amount incorporated |
|---|---|
| Compound seasoning a* | 5.34 g |
| (or Compound seasoning b)* | (5.38 g) |
| (or Compound seasoning c)* | (5.37 g) |
| (or MSG) | (5 g) |
| Chicken bone soup stock** | 1 l |
| Table salt | 8 g |

\* The amount added was changed in order to make the content of the L-glutamic acid salt equivalent to the content of L-glutamic acid in the control MSG.

\*\* The chicken bone soup stock was prepared by adding 8 l of water to 500 g of chicken bones and 500 g of pork bones, boiling down for 3 hours, and thereafter filtering to obtain 6 l.

TABLE 28

| | Test No. 1 Compound seasoning a | | MSG | Test No. 2 Compound seasoning b | | MSG | Test No. 3 Compound seasoning c | | MSG |
|---|---|---|---|---|---|---|---|---|---|
| Which is more intense in taste | 10 | | 10 | 9 | | 11 | 9 | | 11 |
| Which is more intense in complexity | 16 | (*) | 4 | 16 | (*) | 4 | 16 | (*) | 4 |
| Which is more preferable in the overall taste | 4 | (*) | 16 | 9 | | 11 | 12 | | 8 |

(*) Significantly different at a level of significance of 5%.

**0 081 236**

Example 8

According to the compositions in Table 29 below, the respective components were uniformly mixed to prepare compound seasonings d—g, respectively.

TABLE 29

| Compound seasoning | Amount incorporated |
| --- | --- |
| d | MSG: 187 g, Dipotassium hydrogenphosphate: 29 g, calcium chloride: 37 g |
| e | MSG: 187 g, Glutamic acid: 25 g, dipotassium hydrogenphosphate: 29 g, calcium lactate: 20 g |
| f | MSG: 187 g, Potassium glutamate: 406 g, calcium glutamate: 162 g |
| g | MSG: 187 g, Dipotassium hydrogenphosphate: 174 g, glutamic acid: 588 g, calcium carbonate: 200 g |

Thereafter, these respective compound seasonings were tested by two-point comparison with MSG using scrambled eggs as the evaluation system by a panel consisting of 20 well-trained members.

The scrambled eggs were prepared from the composition shown in Table 30. The organoleptic test was conducted for the items: the intensity of taste, the intensity of complexity and preference of the overall taste of the scrambled eggs.

The results are set forth in Table 31. Those to which the compound seasoning e and f had been added respectively had more intensified complexicity and were significantly preferred as compared with that to which MSG alone had been added. That to which the compound seasoning g had been added had a worse taste and was significantly less preferred than that to which MSG alone had been added. That to which the compound seasoning d had been added did not show any significant difference from MSG.

TABLE 30

| | |
| --- | --- |
| Compound seasoning d* | 1.35 g |
| (or Compound seasoning e)* | (1.13 g) |
| (or Compound seasoning f)* | (1.14 g) |
| (or Compound seasoning g)* | (1.23 g) |
| (or MSG) | (1 g) |
| Eggs | 500 g |
| Salt | 3 g |
| White pepper | 0.5 g |
| Butter | 50 g |

* The amount added was changed so as to make the content of the L-glutamic acid salt equivalent to the content of L-glutamic acid in the control MSG.

24

TABLE 31

| | Test No. 1 Compound seasoning d | | MSG | Test No. 2 Compound seasoning e | | MSG | Test No. 3 Compound seasoning f | | MSG | Test No. 4 Compound seasoning g | | MSG |
|---|---|---|---|---|---|---|---|---|---|---|---|---|
| Which is more intense in taste | 12 | | 8 | 11 | | 9 | 12 | | 8 | 9 | | 11 |
| Which is more intense in complexity and mouthfulness | 14 | | 6 | 16 | (*) | 4 | 15 | (*) | 5 | 16 | (*) | 4 |
| Which is more preferable in the overall taste | 13 | | 7 | 16 | (*) | 4 | 15 | (*) | 5 | 5 | (*) | 15 |

(*) Significantly different at a level of significance of 5%.

0 081 236

Example 9

According to the compositions in Table 32 below, the respective components were uniformly mixed to prepare compound seasonings h—k, respectively.

TABLE 32

| | Control | h | i | j | k |
|---|---|---|---|---|---|
| MSG | 4300 g | 4300 g | 4300 g | 4300 g | 4300 g |
| IN*) | 50 | 50 | 50 | 50 | 50 |
| Black pepper | 3000 | 3000 | 3000 | 3000 | 3000 |
| Table salt | 4500 | 1000 | 3000 | 3400 | 1300 |
| Potassium chloride | | 3000 | 1100 | 1200 | 3400 |
| Calcium chloride | | 1100 | 400 | 150 | 500 |
| Total | 11850 | 12450 | 11850 | 12100 | 12550 |

*) Sodium inosine-5'-monophosphate produced by Ajinomoto Co., Inc.

Thereafter, these respective compound seasonings were tested by two-point comparison with MSG using scrambled eggs as the evaluation system by a panel consisting of 20 well-trained members.

The scrambled eggs were prepared from the composition shown in Table 33. The organoleptic test was conducted for the items: the intensity of taste, the intensity of complexity and preference of the overall taste of the scrambled eggs.

The results are set forth in Table 34. Those to which the compound seasonings h and k had been added respectively had more intensified complexity and were significantly preferred as compared with that to which MSG alone had been added. Those to which the compound seasonings i and j had been added respectively did not show any significant difference from MSG.

TABLE 33

| | |
|---|---|
| Compound seasoning i* | 3.00 g |
| (or Compound seasoning h)* | (3.15 g) |
| (or Compound seasoning j)* | (3.18 g) |
| (or Compound seasoning k)* | (3.06 g) |
| (or Control) | (3 g) |
| Eggs | 500 g |
| Salt | 1.5 g |
| Butter | 50 g |

* The amount added was changed so as to make the content of the L-glutamic acid salt equivalent to the content of L-glutamic acid in the control MSG.

TABLE 34

| | Test No. 1 | | | Test No. 2 | | | Test No. 3 | | | Test No. 4 | | |
| | Compound seasoning h | | Control | Compound seasoning i | | Control | Compound seasoning j | | Control | Compound seasoning k | | Control |
|---|---|---|---|---|---|---|---|---|---|---|---|---|
| Which is more intense in taste | 9 | | 11 | 8 | | 12 | 10 | | 10 | 12 | | 8 |
| Which is more intense in complexity and mouthfulness | 15 | (*) | 5 | 13 | | 7 | 11 | | 9 | 15 | (*) | 5 |
| Which is more preferable in the overall taste | 15 | (*) | 5 | 12 | | 8 | 12 | | 8 | 16 | (*) | 4 |

(*) Significantly different at a level of significance of 5%.

Example 10

According to the compositions in Table 35 below, the respective components were uniformly mixed to prepare compound seaonings l—o.

TABLE 35

| | Control | l | m | n | o |
|---|---|---|---|---|---|
| Flakes of dried bonito | 200 g | 200 g | 200 g | 200 g | 200 g |
| Table salt | 300 | 56 | 104 | 164 | 98 |
| Potassium chloride | | 49 | 170 | 115 | 31 |
| Calcium chloride | | 213 | 79 | 62 | 187 |
| Sodium glutamate | 295 | 295 | 295 | 295 | 295 |
| IN*) | 5 | 5 | 5 | 5 | 5 |
| Protein hydrolysate | 30 | 30 | 30 | 30 | 30 |
| Sugar | 170 | 170 | 170 | 170 | 170 |
| Total | 1000 | 1018 | 1053 | 1041 | 1061 |

*) Sodium inosine-5'-monophosphate produced by Ajinomoto Co., Inc.

Thereafter, these respective compound seasonings were tested by two-point comparison with MSG using *miso* soup as the evaluation system by a panel consisting of 20 well-trained members.

The *miso* soup was prepared from the composition shown in Table 36. The organoleptic test was conducted for the items: the intensity of taste, the intensity of complexity and preference of the overall taste of the *miso* soup.

The results are set forth in Table 37. Those to which the compound seasonings m and n had been added respectively had more intensified complexity and were significantly preferred as compared with that to which the control had been added. Those to which the compound seasonings l and o had been added respectively had a worst taste and were significantly less preferred than that to which the control had been added.

TABLE 36

| | Miso soup |
|---|---|
| Compound seasoning l* | 7.13 g |
| (or Compound seasoning m)* | (7.4 g) |
| (or Compound seasoning n)* | (7.29 g) |
| (or Compound seasoning o)* | (7.11 g) |
| (or Control) | (7.0 g) |
| Water | 1 l |
| Miso | 90 g |

* The amount added was changed so as to make the content of the L-glutamic acid salt equivalent to the content of L-glutamic acid in the control.

### TABLE 37

| | Test No. 1 | | | Test No. 2 | | | Test No. 3 | | | Test No. 4 | | |
| | Compound seasoning l | | MSG | Compound seasoning m | | MSG | Compound seasoning n | | MSG | Compound seasoning o | | MSG |
|---|---|---|---|---|---|---|---|---|---|---|---|---|
| Which is more intense in taste | 8 | | 11 | 10 | | 10 | 12 | | 8 | 8 | | 12 |
| Which is more intense in complexity and fullbodied taste | 15 | (*) | 5 | 15 | (*) | 5 | 17 | (*) | 3 | 16 | (*) | 4 |
| Which is more preferable in the overall taste | 4 | (*) | 16 | 15 | (*) | 5 | 16 | (*) | 4 | 3 | (*) | 17 |

(*) Significantly different at a level of significance of 5%.

Example 11

According to the compositions in Table 38 below, the restrictive components were uniformly mixed to prepare compound seasonings p—s.

TABLE 38

| Compound seasoning | Amount incorporated |
|---|---|
| p | Potassium glutamate: 144 g, sodium fumarate: 30 g, calcium chloride: 4 g |
| q | Potassium glutamate: 73 g, sodium malate: 103 g, calcium carbonate: 5 g, glutamic acid: 13 g |
| r | Potassium glutamate: 77 g, sodium citrate: 170 g, calcium chloride: 2 g |
| s | Sodium aspartate: 33 g, potassium glutamate: 132 g, calcium carbonate: 8 g, glutamic acid: 24 g |

Thereafter, these respective compound seasonings were tested by two-point comparison with MSG using *miso* soup as the evaluation system by a panel consisting of 20 well-trained members.

The *miso* soup was prepared from the composition shown in Table 39. The organoleptic test was conducted for the items: the intensity of taste, the intensity of complexity and preference of the overall taste of the *miso* soup.

The results are set forth in Table 40. Those to which the compound seasonings p—s had been added respectively had more intensified complexity and were significantly preferred as compared with that to which MSG-alone had been added.

TABLE 39

| | Miso soup |
|---|---|
| Compound seasoning p* | 2.82 g |
| (or Compound seasoning q)* | (5.56 g) |
| (or Compound seasoning r)* | (5.27 g) |
| (or Compound seasoning s)* | (3.08 g) |
| (or MSG) | (2 g) |
| Water | 1 l |
| Flakes of dried bonito | 10 g |
| Miso | 90 g |

* The amount added was changed in order to make the content of the L-glutamic acid salt equivalent to the content of L-glutamic acid in the control MSG.

## TABLE 40

| | Test No. 1 Compound seasoning p | | MSG | Test No. 2 Compound seasoning q | | MSG | Test No. 3 Compound seasoning r | | MSG | Test No. 4 Compound seasoning s | | MSG |
|---|---|---|---|---|---|---|---|---|---|---|---|---|
| Which is more intense in taste | 10 | | 10 | 9 | | 11 | 8 | | 12 | 11 | | 9 |
| Which is more intense in complexity | 15 | (*) | 5 | 16 | (*) | 4 | 16 | (*) | 4 | 15 | (*) | 5 |
| Which is more preferable in the overall taste | 15 | (*) | 5 | 15 | (*) | 5 | 15 | (*) | 5 | 16 | (*) | 4 |

(*) Significantly different at a level of significance of 5%.

Example 12

According to the compositions in Table 41 below, the respective components were uniformly mixed to prepare compound seasonings t, u and v, respectively.

TABLE 41

| Compound seasoning | Potassium L-glutamate monohydrate | Sodium L-glutamate monohydrate | Calcium L-glutamate tetrahydrate |
|---|---|---|---|
| t | 65 | 30 | 5 |
| u | 90 | 10 | 0 |
| v | 98 | 2 | 0 |

Thereafter, these respective compound seasonings were tested by two-point comparison with MSG using clear soup as the evaluation system by a panel consisting of 20 well-trained members.

The clear soup was prepared from the composition set forth in Table 42. The organoleptic test was conducted for the items: the intensity of taste, the intensity of complexity and preference of the overall taste of the clear soup.

The results are set forth in Table 43. That to which the compound seasoning t or u had been added had more intensified complexity as compared with that to which MSG alone had been added, and thus was significantly preferred.

TABLE 42

| | Clear soup |
|---|---|
| Compound seasoning t* | 21.2 g |
| (or Compound seasoning u)* | (2.15 g) |
| (or Compound seasoning v)* | (2.17 g) |
| (or MSG) | (2 g) |
| Water | 1 l |
| Flakes of dried bonito | 10 g |
| Table salt | 8 g |
| Soy sauce | 3 ml |

* The amount added was changed so as to make the content of the L-glutamic acid salt equivalent to the content of L-glutamic acid in the control MSG.

TABLE 43

| | Test No. 1 Compound seasoning | | Test No. 2 Compound seasoning | | Test No. 3 Compound seasoning | |
|---|---|---|---|---|---|---|
| | t | MSG | u | MSG | v | MSG |
| Which is more intense in taste | 9 | 11 | 10 | 10 | 9 | 11 |
| Which is more intense in complexity | 17 (**) | 3 | 15 (*) | 5 | 13 | 7 |
| Which is more preferable in the overall taste | 16 (*) · | 4 | 15 (*) · | 5 | 12 | 8 |

(*) Significantly different at a level of significance of 5%.
(**) Significantly different at a level of significance of 1%.

Example 13

According to the compositions in Table 44 below, the respective components were uniformly mixed to prepare compound seasonings w—y, respectively.

TABLE 44

| Compound seasoning | Potassium L-glutamate monohydrate | Sodium L-glutamate monohydrate | Calcium L-glutamate tetrahydrate |
|---|---|---|---|
| w | 80 | 15 | 5 |
| x | 30 | 35 | 35 |
| y | 25 | 75 | 0 |

Thereafter, these respective compound seasonings were tested by two-point comparison with MSG using *miso* soup as the evaluation system by a panel consisting of 20 well-trained members.

The *miso* (fermented soybean paste) soup was prepared from the composition set forth in Table 45. The organoleptic test was conducted for the items: the intensity of taste, the intensity of complexity and preference of the overall taste of the miso soup.

The results are set forth in Table 46. That to which the compound seasoning w had been added had more intensified complexicity as compared with that to which MSG alone had been added, and thus was significantly preferred.

TABLE 45

| | Miso soup |
|---|---|
| Compound seasoning w* | 2.15 g |
| (or Compound seasoning x)* | (2.10 g) |
| (or Compound seasoning y)* | (2.05 g) |
| (or MSG) | (2 g) |
| Water | 1 l |
| Flakes of dried bonito | 10 g |
| Miso | 90 g |

* The amount added was changed so as to make the content of the L-glutamic acid salt equivalent to the content of L-glutamic acid in the control MSG.

TABLE 46

| | Test No. 1 Compound seasoning w | MSG | Test No. 2 Compound seasoning x | MSG | Test No. 3 Compound seasoning y | MSG |
|---|---|---|---|---|---|---|
| Which is more intense in taste | 10 | 10 | 11 | 9 | 9 | 11 |
| Which is more intense in complexity | 16 (*) | 4 | 13 | 7 | 12 | 8 |
| Which is more preferable in the overall taste | 16 (*) | 4 | 11 | 9 | 12 | 8 |

(*) Significantly different at a level of significance of 5%.

Example 14

According to the compositions in Table 47 below, the respective components were uniformly mixed to prepare compound seasonings i—iii respectively.

33

# 0 081 236

### TABLE 47

| Compound seasoning | Potassium L-glutamate monohydrate | Sodium L-glutamate monohydrate | Calcium L-glutamate tetrahydrate |
|---|---|---|---|
| i | 45 | 30 | 25 |
| ii | 50 | 15 | 35 |
| iii | 75 | 5 | 20 |

Thereafter, these respective compound seasonings were tested by two-point comparison with MSG using consommé as the evaluation system by a panel consisting of 20 well-trained members.

The consommé was prepared from the composition in Table 48. The organoleptic test was conducted for the items: the intensity of taste, the intensity of complexity and preference of the overall taste of the consommé.

The results are set forth in Table 49. That to which the compound seasoning i had been added had more intensified complexity as compared with that to which MSG alone had been added, and thus was significantly preferred.

### TABLE 48

| Ingredient | Amount |
|---|---|
| Compound seasoning i* | 3.17 g |
| (or Compound seasoning ii)* | (3.21 g) |
| (or Compound seasoning iii)* | (3.24 g) |
| (or MSG) | (3 g) |
| Vegetable protein hydrolysate powder | 12 g |
| Beef extract powder | 1 g |
| Yeast extract powder | 1 g |
| Beef tallow | 1 g |
| Table salt | 5.4 g |
| Sugar | 3.5 g |
| Onion powder | 1.9 g |
| Celery powder | 0.3 g |
| Sea salt pepper | 0.02 g |
| Caramel powder | 0.4 g |
| Water | 1 l |

* The amount added was changed so as to make the content of the L-glutamic acid salt equivalent to the content of L-glutamic acid in the control MSG.

34

TABLE 49

|  | Test No. 1 | | | Test No. 2 | | Test No. 3 | |
|---|---|---|---|---|---|---|---|
|  | Compound seasoning i | | MSG | Compound seasoning ii | MSG | Compound seasoning iii | MSG |
| Which is more intense in taste | 10 | | 10 | 9 | 11 | 9 | 11 |
| Which is more intense in complexity | 16 | (*) | 4 | 12 | 8 | 11 | 9 |
| Which is more preferable in the overall taste | 16 | (*) | 4 | 10 | 10 | 11 | 9 |

(*) Significantly different at a level of significance of 5%.

Example 15

Compound seasonings iv—vi having the compositions of Table 50 below were prepared respectively by mixing uniformly.

TABLE 50

| Compound seasoning | Potassium L-glutamate monohydrate | Sodium L-glutamate monohydrate | Calcium L-glutamate tetrahydrate |
|---|---|---|---|
| iv | 65 | 10 | 25 |
| v | 45 | 55 | 0 |
| vi | 60 | 40 | 0 |

Thereafter, these respective compound seasonings were tested by two-point comparison with MSG using chicken bone soup as the evaluation system by a panel consisting of 20 well-trained members.

The chicken bone soup was prepared as shown in Table 51. The organoleptic test was conducted for the items: the intensity of taste, the intensity of complexity and preference of the overall taste of the chicken bone soup.

The results are set forth in Table 52. Those to which the compound seasonings iv, v and vi had been added respectively had more intensified complexicity as compared with that to which MSG alone had been added, and thus were significantly preferred.

TABLE 51

| Ingredient | Amount |
|---|---|
| Compound seasoning iv* | 5.38 g |
| (or Compound seasoning v)* | (5.19 g) |
| (or Compound seasoning vi)* | (5.25 g) |
| (or MSG) | (5 g) |
| Chicken bone soup stock** | 1 l |
| Table salt | 8 g |

* The amount added was changed so as to make the content of the L-glutamic acid salt equivalent to the content of L-glutamic acid in the control MSG.
** The chicken bone soup stock was prepared by adding 8 l of water to 500 g of chicken bones and 500 g of pork bones, boiling down for 3 hours, and thereafter filtering to obtain 6 l.

TABLE 52

| | Test No. 1 Compound seasoning iv | MSG | Test No. 2 Compound seasoning v | MSG | Test No. 3 Compound seasoning vi | MSG |
|---|---|---|---|---|---|---|
| Which is more intense in taste | 9 | 11 | 10 | 10 | 11 | 9 |
| Which is more intense in complexity | 15 (*) | 5 | 17 (**) | 3 | 17 (**) | 3 |
| Which is more preferable in the overall taste | 16 (*) | 4 | 15 (*) | 5 | 16 (*) | 4 |

(*) Significantly different at a level of significance of 5%.
(**) Significantly different at a level of significance of 1%.

Example 16

Sodium L-glutamate crystals and calcium L-glutamate crystals were respectively pulverized in a pinmill pulverizer to obtain sodium L-glutamate fine powder and calcium L-glutamate fine powder of an average particle size of 100 μm respectively.

To 65 parts by weight of potassium L-glutamate crystals were added and mixed 30 parts by weight of the sodium L-glutamate fine powder and 5 parts by weight of calcium L-glutamate fine powder both obtained above, then 7 parts by weight of water was added, kneaded on a kneader and dried in a fluidized bed to obtain a compound seasoning of this invention.

As the control, that prepared by not conducting the above pulverization and pelletization was used, and the physical properties and appearances of the product of this invention and the control product were compared and evaluated. The results are given in Table 53.

TABLE 53

| | Product by stirred coating pelletization | Control product |
|---|---|---|
| Apparent specific volume (cc/g) | 1.6 | 1.3 |
| Dissolving rate[*1] (22°C) | 240 sec. | 360 sec. |
| Flow characteristics[*2] | Has flowability | Agglomerated |
| Appearance | White | Crystalline brilliance |

[*1] 100 cc of water is added to a 200 cc beaker, then while mildly stirring it using a magnetic stirrer, 10 g of the sample is added and the time to dissolve is measured.
[*2] The sample is left in a constant-temperature constant-humidity chamber at 34°C and a relative humidity of 74% for 24 hours, and measured.

As shown in Table 53, the granular compound seasoning of this invention has a rapid dissolving rate and is rich in flow characteristics.

As clear from the above results, the compound seasonings of this invention are of extremely satisfactory quality which manifests unprecedented features in organoleptic and physical properties.

**Claims**

1. A compound seasoning composition based on glutamic acid salts, which contains sodium, potassium and calcium components in such ratio that the gram equivalent ratio of sodium:potassium is in the range of 0—3.5:1, the gram equivalent ratio of calcium:potassium in the range of 0—1.5:1 and a ratio of (mole number of glutamic acid):(total gram equivalent number of potassium, sodium and calcium) in the range of 0.1—1.2:1, wherein the content of the sodium component is different from zero.

2. The compound seasoning composition according to Claim 1 which is characterized by that the gram equivalent ratio of sodium, potassium and calcium is within such range that sodium:potassium=1:4—5:2,

36

(gram equivalent number of calcium):(total gram equivalent number of potassium, sodium and calcium)=0—0.3:1 and (mole number of glutamic acid):(total gram equivalent number of potassium, sodium and calcium)=0.4—1.2:1.

3. The compound seasoning composition according to Claim 1 which is characterized by that the gram equivalent ratio of sodium, potassium and calcium is within such range that calcium:potassium=0—1.5:1, (gram equivalent number of sodium):(total gram equivalent number of sodium, potassium and calcium)=0—0.15:1 and (mole number of glutamic acid):(total gram equivalent number of potassium, sodium and calcium)=0.4—1.2:1.

4. The compound seasoning composition according to any of Claims 1—3 which is characterized by containing one or more compounds selected from sodium glutamate, potassium glutamate and calcium glutamate.

5. The compound seasoning composition according to Claim 1, which is characterized by comprising 30—95% by weight of potassium L-glutamate, 5—70% by weight of sodium L-glutamate and 0—30% by weight of calcium L-glutamate.

6. Compound seasoning composition according to any of the Claims 1 to 5, characterized in that the glutamic acid salts are salts of L-glutamic acid.

7. A process for producing a compound seasoning according to any of the Claims 1 to 6, characterized by pelletizing a powder of finely divided crystals of (1) sodium glutamate and (2) crystals of potassium glutamate and optionally calcium glutamate with a binder.

8. A process according to Claim 7, wherein the binder is water, an aqueous sodium L-glutamate solution, an aqueous potassium L-glutamate solution, an aqueous dextrine solution, an aqueous solution of a taste intensifying nucleic acid or a mixture of two or more of the stated substances.

9. Use of a compound seasoning according to any of the Claims 1 to 6 as a food component.

## Patentansprüche

1. Würzmittelzusammensetzung auf Basis von Salzen der Glutaminsäure, die Natrium-, Kalium- und Calcium-Komponenten in einem solchen Verhältnis enthält, daß das Grammäquivalentverhältnis von Natrium zu Kalium im Bereich von 0 bis 3,5 zu 1, das Grammäquivalentverhältnis von Calcium zu Kalium im Bereich von 0 bis 1,5 zu 1 und das Verhältnis (Molzahl der Glutaminsäure) zu (Gesamt-Gramm-Äquivalentzahl von Kalium, Natrium und Calcium) im Bereich von 0,1 bis 1,2 zu 1 liegt, wobei der Gehalt an Natrium-Komponente von Null verschieden ist.

2. Würzmittelzusammensetzung nach Anspruch 1, dadurch gekennzeichnet, daß das Grammäquivalentverhältnis von Natrium, Kalium und Calcium innerhalb eines solchen Bereiches liegt, daß Natrium zu Kalium=1 zu 4 bis 5 zu 2, (Grammäquivalentzahl von Calcium) zu (Gesamt-Grammäquivalentzahl von Kalium, Natrium und Calcium)=0 bis 0,3 zu 1 und (Molzahl der Glutaminsäure) zu (Gesamt-Grammäquivalentzahl von Kalium, Natrium und Calcium)=0,4 bis 1,2 zu 1.

3. Würzmittelzusammensetzung nach Anspruch 1, dadurch gekennzeichnet, daß das Grammäquivalentverhältnis von Natrium, Kalium und Calcium innerhalb eines solchen Bereiches liegt, daß Calcium zu Kalium=0 bis 1,5 zu 1, (Grammäquivalentzahl von Natrium) zu (Gesamt-Gramm-Äquivalentzahl von Natrium, Kalium und Calcium)=0 bis 0,15 zu 1 und (Molzahl der Glutaminsäure) zu (Gesamt-Gramm-Äquivalentzahl von Kalium, Natrium und Calcium)=0,4 bis 1,2 zu. 1.

4. Würzmittelzusammensetzung nach einem der Ansprüche 1 bis 3, dadurch gekennzeichnet, daß sie eine oder mehr der Verbindungen Natriumglutamat, Kaliumglutamat und Calciumglutamat enthält.

5. Würzmittelzusammensetzung nach Anspruch 1, dadurch gekennzeichnet, daß sie 30 bis 95 Gew.-% Kalium-L-glutamat, 5 bis 70 Gew.-% Natrium-L-glutamat und 0 bis 30 Gew.-% Calcium-L-glutamat enthält.

6. Würzmittelzusammensetzung nach einem der Ansprüche 1 bis 5, dadurch gekennzeichnet, daß die Salze der Glutaminsäure Salze der L-Glutaminsäure sind.

7. Verfahren zur Herstellung einer Würzmittelzusammensetzung nach einem der Ansprüche 1 bis 6, dadurch gekennzeichnet, daß ein Pulver, das aus feinverteilten Kristallen aus (1) Natriumglutamat und (2) Kristallen von Kaliumglutamat und gegebenenfalls Calciumglutamat besteht, zusammen mit einem Bindemittel pelletisiert wird.

8. Verfahren nach Anspruch 7, bei dem das Bindemittel Wasser, eine wäßrige Natrium-L-glutamat-Lösung, eine wäßrige Kalium-L-glutamat-Lösung, eine wäßrige Dextrin-Lösung, eine wäßrige Lösung einer geschmacksverstärkenden Nucleinsäure oder eines Gemisches aus zwei oder mehr der genannten Substanzen ist.

9. Verwendung einer Würzmittelzusammensetzung nach einem der Ansprüche 1 bis 6 als Nahrungsmittelbestandteil.

## Revendications

1. Une composition d'assaisonnement composé à base de sels de l'acide glutamique qui contient les composants de type sodium, potassium et calcium dans un rapport tel que le rapport des équivalents-grammes de sodium/potassium est dans la gamme de 0—3,5/1, le rapport des équivalents-grammes de calcium/potassium est dans la gamme de 0—1,5/1 et le rapport de (nombre de moles d'acide glutamique)/(nombre total d'équivalents-grammes de potassium, sodium et calcium) est dans la gamme de 0,1—1,2/1, où la teneur du composant de type sodium est différente de 0.

2. La composition d'assaisonnement composé selon la revendication 1 qui est caractérisée en ce que le rapport des équivalents-grammes de sodium, potassium et calcium est dans une gamme telle que sodium/potassium=1/4—5/2, (nombre d'équivalents-grammes de calcium)/(nombre total d'équivalents-grammes de potassium, sodium et calcium)=0—0,3/1 et (nombre de moles d'acide glutamique)/(nombre total des équivalents-grammes de potassium, sodium et calcium)=0,4—1,2/1.

3. La composition d'assaisonnement composé selon la revendication 1 qui est caractérisée en ce que le rapport des équivalents-grammes de sodium, potassium et calcium est dans une gamme telle que calcium/potassium=0—1,5/1, (nombre d'équivalents-grammes de sodium)/(nombre total d'équivalents-grammes de sodium, potassium et calcium)=0—0,15/1 et (nombre de moles d'acide glutamique)/(nombre total d'équivalents-grammes de potassium, sodium et calcium)=0,4—1,2/1.

4. La composition d'assaisonnement composé selon l'une quelconque des revendications 1 à 3, caractérisée en ce qu'elle contient un ou plusieurs composés choisis parmi le glutamate de sodium, le glutamate de potassium et le glutamate de calcium.

5. La composition d'assaisonnement composé selon la revendication 1 qui est caractérisée en ce qu'elle comprend 30 à 95% en poids de L-glutamate de potassium, 5 à 70% en poids de L-glutamate de sodium et 0 à 30% en poids de L-glutamate de calcium.

6. Composition d'assaisonnement composé selon l'une quelconque des revendications 1 à 5, caractérisée en ce que les sels de l'acide glutamique sont des sels de l'acide L-glutamique.

7. Un procédé pour la production d'un assaisonnement composé selon l'une quelconque des revendications 1 à 6, caractérisé par le pastillage d'une poudre de cristaux finement divisés de (1) du glutamate de sodium et (2) des cristaux de glutamate de potassium et éventuellement du glutamate de calcium comme liant.

8. Un procédé selon la revendication 7, dans lequel le liant est l'eau, une solution aqueuse de L-glutamate de sodium, une solution aqueuse de L-glutamate de potassium, une solution aqueuse de dextrine, une solution aqueuse d'un acide nucléique exhausteur de goût ou un mélange de deux ou plusieurs des substances indiquées.

9. L'emploi d'un assaisonnement composé selon l'une quelconque des revendications 1 à 6 comme composant alimentaire.